# EUROPÄISCHE PATENTSCHRIFT

(11) **EP 1 424 240 B1**
(45) Veröffentlichungstag und Bekanntmachung des Hinweises auf die Patenterteilung: **19.10.2005**
(21) Anmeldenummer: 03026799.1
(22) Anmeldetag: 22.11.2003
(51) Int. Cl.: B60Q 1/12

(54) **Scheinwerfer für Fahrzeuge**
Headlamp for vehicle
Projecteur pour véhicule

(30) Priorität: 30.11.2002 DE 10255990
(43) Veröffentlichungstag der Anmeldung: 02.06.2004
(73) Patentinhaber: Hella KGaA Hueck & Co., 59552 Lippstadt (DE)
(72) Erfinder: Brummel, Reinhold, 59609 Anröchte (DE); Plotzitzka, Jörg, 59558 Lippstadt (DE)

(56) Entgegenhaltungen:
- EP-A- 1 147 942
- DE-A- 10 036 771
- DE-A- 10 120 217
- DE-A- 10 122 800
- DE-A- 10 209 623
- DE-A- 10 217 194

## Beschreibung

Die Erfindung betrifft einen Scheinwerfer mit einem Projektionsmodul, das einen schalenförmigen Reflektor, eine Linse und einen am vorderen Rand des Reflektors befestigten Linsenhalter aufweist, und mit einem Trägerelement, an dem der Reflektor an einer oberen und unteren Lagerstelle gehaltert ist, und mit einem fernbetätigbaren Steller, durch den der Reflektor um eine von den Lagerstellen definierte Schwenkachse zur Kurvenlichtregelung schwenkbar ist.

Ein solcher Scheinwerfer für Fahrzeuge ist aus der DE 198 02 023 A1 bekannt. Der Scheinwerfer weist ein topfförmiges Scheinwerfergehäuse auf, dessen Vorderseite durch eine lichtdurchlässige Abschlussscheibe abgeschlossen ist In dem von Scheinwerfergehäuse und Abschlussscheibe gebildeten Inneren des Scheinwerfers ist ein Lichtelement, das ein Projektionsmodul ist, angeordnet. Das Projektionsmodul und ein Abblendlichtmodul sind zusammen von einem Trägerelement gehaltert, das in dem Scheinwerfergehäuse um eine horizontale Achse schwenkbar gelagert ist. Die horizontale Achse ist von zwei Halteteilen mit,gelenkartigen Verbindungselementen gebildet. Das Trägerelement ist durch einen fernbetätigbaren ersten Steller zur vertikalen Leuchtweiteregelung des Scheinwerfers um die horizontale Achse schwenkbar. Das Projektionsmodul ist an dem Trägerelement um eine vertikale Schwenkachse verstellbar gelagert und durch einen am Trägerelement befestigten fernbetätigbaren zweiten Steller für Kurvenlicht um die vertikale Schwenkachse schwenkbar. Der zweite fernbetätigbare Steller wird durch eine externe elektrische Steuereinheit in Abhängigkeit von der Ausrichtung der Vorderräder des Fahrzeugs im Verhältnis zu dessen Achse sowie in Abhängigkeit von anderen Parametern, wie etwa von der Fahrgeschwindigkeit des Fahrzeugs, der Betätigung der Blinkleuchten usw., gesteuert. Die vertikale Schwenkachse ist definiert durch eine obere und untere Lagerstelle und verläuft durch den vorderen den Reflexionsbereich aufweisen Randbereich des schalenförmigen Reflektors. Die Lagerstellen sind von freistehenden Haltelaschen des Trägerelements gebildet. Der fernbetätigbare zweite Steller ist über ein Gelenk mit dem die Reflexionsfläche bildenden vorderen Randbereich des Reflektors verbunden. Das Projektionsmodul baut zusammen mit dem Trägerelement voluminös und das den Steller halternde Trägerelement ist bei unterschiedlichen Projektionsmodulen, wie zum Beispiel bei einem Projektionsmodul mit einem Blechreflektor nicht universell einsetzbar, da sonst in der Reflexionsfläche eine störendes Befestigungsloch zu sehen wäre. Wenn die beiden Lagerstellen jeweils das Projektionsmodul in alle Richtungen haltern, muss das Trägerelement sowohl im oberen als auch unteren Bereich stabil ausgeführt sein. Weiterhin müssten beide Lagerstellen aufwendig aufgebaut sein und die Befestigung des Projektionsmoduls an dem Trägerelement wäre umständlich und zeitaufwendig. Dokument DE 10122800 veroffenbart ein Scheinwerfer nach dem Oberbegriff des Anspruchs 1.

Aufgabe der Erfindung ist es, den im Oberbegriff des Anspruchs 1 beschriebenen Scheinwerfer für Fahrzeuge derart zu verbessern, dass das Projektionsmodul zusammen mit dem Trägerelement und dem fernbetätigbaren Steller als eine kompakte stabile Baueinheit ausführbar ist und Teile der Baueinheit universell bei unterschiedlichen Projektionsmodulen verwendbar sind, wobei der Reflektor des Projektionsmoduls auch aus Blech bestehen kann. Diese Aufgabe wird nach der Erfindung dadurch gelöst, dass der vordere Rand des Reflektors radial nach außen gerichtet ist und ein Befestigungselement für das Trägerelement, einer Halteaufnahme des fernbetätigbaren Stellers und mindestens einer Versteifungsstütze ist, wobei die Versteifungsstütze zwischen dem oberen vorderen Rand des Reflektors und der Halteaufnahme verläuft, die unterhalb des Reflektors angeordnet ist und an dem unteren vorderen Rand des Reflektors befestigt ist. Mit einem radial nach außen stehenden vorderen Rand ist ein Reflektor aus Blech, Kunststoff und Metallguss herstellbar. Der Steller ist unbeweglich mit dem Projektionsmodul verbunden. Wegen der Versteifungsstütze ist auch bei einem leichten Aufbau der Baueinheit der Steller in der Halteaufnahme und somit auch das Projektionsmodul, ohne störenden Schwingungen ausgesetzt zu sein, gehalten.

Ein besonders kompakter Aufbau der aus Projektionsmodul und Steller gebildeten Baueinheit besteht, wenn das Trägerelement an der unteren Lagerstelle über die Halteaufnahme des Stellers an dem unteren vorderen Rand des Reflektors gehaltert ist und die Halteaufnahme sich zur Rückseite des Reflektors hin erstreckt und an ihrem rückwärtigen Endabschnitt den fernbetätigbaren Steller für Kurvenlicht trägt, der über ein Stellelement mit dem Trägerelement gekoppelt ist, wobei die Versteifungsstütze mit dem rückwärtigen Endabschnitt der Halteaufnahme verbunden ist. Dadurch kann der Steller und die Versteifungsstütze nahe der Außenseite des schalenförmigen Reflektors angeordnet sein. Die Baueinheit ist besonders stabil, wenn von oben auf den Scheinwerfer gesehen zu beiden Seiten des Reflektors eine Versteifungsstütze verläuft und die beiden Versteifungsstützen im Bereich des oberen vorderen Randes durch einen sie verbindenden Steg einstückig ausgebildet sind. Wegen letzterem ist eine einfache und schnelle Montage der Versteifungsstützen möglich.

Bei einer besonders vorteilhaften Weiterbildung der Erfindung ist die obere Lagerstelle ein den Reflektor ausschließlich radial halterndes Lager mit einem Lagerzapfen und einer Lageröffnung, während die untere Lagerstelle den Reflektor in alle Richtungen haltert,wobei eine schwingungsdämpfende Vorrichtung ein federndes Element aufweist, das zwischen dem Trägerelement im Bereich der oberen Lagerstelle und einem vorderen Rand des schalenförmigen Reflektors angeordnet ist und den Lagerzapfen und eine Innenseite der Lageröffnung radial aneinander drücken. Da die obere Lagerstelle keine vertikale Kraft aufnimmt, ist diese und das zwischen ihr und der unteren Lagerstelle verlaufende Trägerelement entsprechend klein und leicht bauend ausführbar. Durch die schwingungsdämpfende Vorrichtung ist der Reflektor auch dann schwingungsfrei gehalten, wenn zwischen dem Lagerzapfen und der Lageröffnung eine Spielpassung besteht. Weiterhin verhindert die Federkraft des federnden Elements im Fahrbetrieb, bei Motorvibrationen oder beim Zuschlagen der Türen ein Zittern des aus dem Scheinwerfer austretenden Lichtbündels. Außerdem ist der Lagerzapfen einfach und schnell in die Lageröffnung einsteckbar.

Die Federkraft des federnden Elements ist in jeder Kurvenlichtstellung des Reflektors annähernd gleich groß, wenn die schwingungsdämpfende Vorrichtung eine konvexe Kurvenfläche aufweist, an der das federnde Element mit einer konvexen Kurvenfläche unter Vorspannung anliegt, wobei eine der konvexen Kurvenflächen die vertikale Schwenkachse abschnittsweise umgibt. Dadurch ist beim Schwenken.des Reflektor immer ein annähernd eine gleich große Verstellkraft notwendig.

Die Lagerstellen sind platzsparend anzuordnen, wenn zwischen dem Reflektor und der Linse die Schwenkachse verläuft. Außerdem ist die Lage der vertikalen Schwenkachse bzw. der Lagerstellen vorteilhaft, da bei Projektionsmodulen häufig ihr Massenschwerpunkt zwischen Reflektor und Linse liegt.

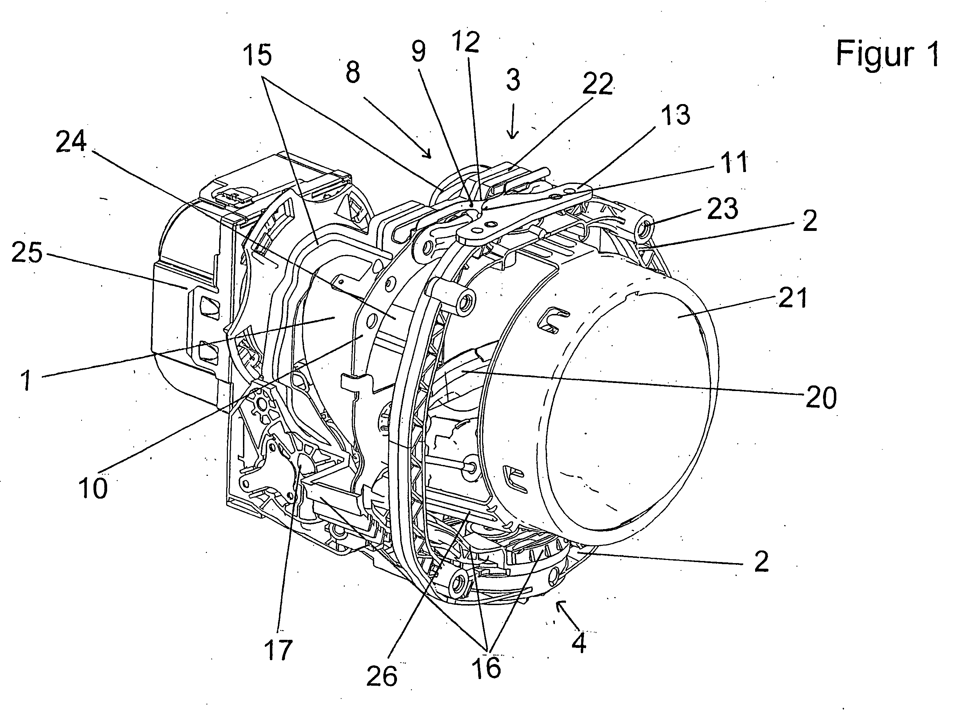

Ein Ausführungsbeispiel nach der Erfindung ist in der Zeichnung dargestellt und zwar zeigen
Figur 1 in einer perspektivischen Ansicht einen Scheinwerfer für Fahrzeuge mit einem Kurvenlichtmodul, welches um zwei Lagerstellen schwenkbar ist,

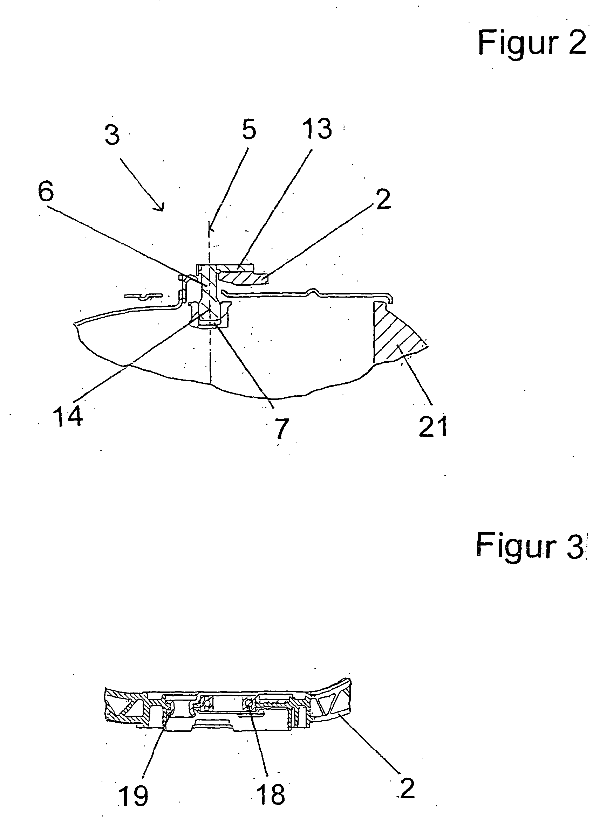

Figur 2 einen Abschnitt eines mittleren vertikalen Längsschnitts durch den Scheinwerfer nach Figur 1 und
Figur 3 einen Abschnitt eines quer zum Längsschnitt verlaufenden Schnitts durch die untere Lagerstelle.

Ein Scheinwerfer für Fahrzeuge weist einen aus Blech bestehenden elliptischen Reflektor 1 eines Projektionsmoduls auf, das von einem rahmenartigen Trägerelement 2 umgeben ist und zusammen mit dem Trägerelement 2 und dem fernbetätigbaren Steller 17 ein Kurvenlichtmodul ist. Das Kurvenlichtmodul ist in einem topfförmigen Scheinwerfergehäuse angeordnet sein, dessen vordere Öffnung durch eine lichtdurchlässige Abschlussscheibe abgeschlossen ist, wobei das Trägerelement 2 an dem Scheinwerfergehäuse um eine horizontale und vertikale Achse schwenkbar gelagert ist und an dem Scheinwerfergehäuse ein zur Leuchtweiteregelung dienender fernbetätigbarer Steller befestigt ist, durch den das Kurvenlichtmodul um die horizontale Achse schwenkbar ist (nicht dargestellt). Dem elliptischen Reflektor 1 ist eine Gasentladungslampe 24 und an seiner Rückseite ein elektrisches Zündgerät 25 für die Gasentladungslampe 24 zugeordnet und in Lichtaustrittsrichtung eine Blendeneinrichtung 20 und eine Linse 21 nachgeschaltet. Ein Linsenhalter 26 der Linse 21 ist mit dem vorderen radial nach außen gerichteten Rand 10 des Reflektors 1 verbunden, der von einem radial nach außen gerichteten umlaufenden Flansch gebildet ist. Das Projektionsmodul kann durch die schaltbare Blendeneinrichtung 20 zur Erzeugung mehrerer Lichtfunktionen, wie zum Beispiel mehrerer Abblendlichtfunktionen und Fernlicht, dienen. Der Reflektor 1 besteht ist mit dem rahmenartigen Trägerelement 2 verbunden und an den Verbindungsstellen um eine vertikale Schwenkachse 5 schwenkbar gelagert. Die Schwenkachse 5 verläuft nahe dem vorderen Rand 10 des Reflektors 1 zwischen dem Reflektor 1 und der Linse 21 und ist definiert von einer oberen und unteren Lagerstelle 3 und 4. Die untere Lagerstelle 4 besteht zwischen dem Trägerelement 2 und einer Halteaufnahme 16 für den Steller 17 und das Projektionsmodul. Die Halteaufnahme 16 ist an dem vorderen Rand 10 des Reflektors 1 befestigt und ist mit der unteren Lagerstelle 4 gekoppelt. Die untere Lagerstelle 4 ist von einem Wälzlager 18, das ein Kugellager ist, gebildet, Das Wälzlager 18 ist in eine zylindrische Lageraufnahme des Trägerelements 2 radial spielfrei eingesetzt und durch mehrere Durchzüge 19 eines Halteteils, die auf einer offenen Seite eine Haltescheibe hintergreifen, axial spielfrei in der Lageraufnahme gehaltert. Der an der Halteaufnahme 16 des Reflektors 1 befestigte fernbetätigbare Steller 17 ist über ein Stellelement (nicht dargestellt) mit dem unteren Bereich des rahmenartigen Trägerelements 2 verbunden. Bei einem Betätigen des Stellers 17 schwenkt der Reflektor 1 bzw. das Projektionsmodul um die vertikale Schwenkachse 5. Die Halteaufnahme 16 ist aus Kunststoff hergestellt und am hinteren den Steller 17 aufweisenden Bereich über zwei Versteifungsstützen 15 mit im oberen Bereich der Reflektors 1 mit seinem vorderen Rand 10 verbunden. Die Versteifungsstützen 15 sind durch eine im Bereich des vorderen Randes 10 des Reflektors 1 verlaufende Querstrebe 22 einstückig aus Blech hergestellt. Ein Halteelement der oberen Lagerstelle 3 ist am vorderen Rand 10 des Reflektors 1 und an den Versteifungsstützen 15 bzw. deren Querstreben 22 befestigt und weist eine als Sackloch ausgeführte Lageröffnung 7 auf. In die Lageröffnung 7 taucht von oben ein Lagerzapfen 6 ein, der im Inneren der Lageröffnung 7 einen tonnenförmigen Kopf 14 aufweist. Der Lagerzapfen 6 besteht auf Metall und ragt von der unteren Seite eines plattenförmigen Halteteils 13 ab. Das Halteteil 13 liegt mit der unteren Seitenfläche an einer Anlagefläche des Trägerelements 2 auf und ist mittels Schrauben an dem Trägerelement 2 befestigt. Die vertikale Schwenkachse 5 ist am Lagerzapfen 6 in einem Abschnitt von einer konvexen Kurvenfläche 11 umgeben, die von einer Schmalseite des plattenförmigen Halteteils 13 gebildet ist. An der konvexen Kurvenfläche 11 liegt unter Vorspannung eine konvexe Kurvenfläche 12 einer Blattfeder an, die von einem federnden Element 9 gebildet ist. Das federnde Element 9 ist mit seinen beiden Endabschnitten an dem vorderen Rand 10 des Reflektors 1 und den Versteifungsstützen 15 bzw. deren Querstrebe 22 befestigt. Der Reflektor 1 bzw. das Projektionsmodul schwenkt zusammen mit der Halteaufnahme 16, den Versteifungsstützen und dem Steller 17 um die vertikale Schwenkachse 5. Das Trägerelement 2 bleibt ortsfest und an vier hülsenartigen Befestigungselementen 23 gehaltert.

### Bezugszeichenliste:

- 1.: Reflektor
- 2.: Trägerelement
- 3.: obere Lagerstelle
- 4.: untere Lagerstelle
- 5.: vertikale Schwenkachse
- 6.: Lagerzapfen
- 7.: Lageröffnung
- 8.: schwingungsdämpfende Vorrichtung
- 9.: federndes Element
- 10.: vorderer Rand
- 11.: konvexe Kurvenfläche
- 12.: konvexe Kurvenfläche
- 13.: Halteteil
- 14.: Kopf
- 15.: Versteifungsstütze
- 16.: Halteaufnahme
- 17.: Steller
- 18.: Wälzlager
- 19.: Durchzüge
- 20.: Blendeneinrichtung
- 21.: Linse
- 22.: Querstrebe
- 23.: Befestigungselemente
- 24.: Gasentladungslampe
- 25.: Zündgerät
- 26.: Linsenhalter

## Patentansprüche

1. Scheinwerfer mit einem Projektionsmodul, das einen schalenförmigen Reflektor (1), eine Linse (21) und einen am vorderen Rand (10) des Reflektors (1) befestigten Linsenhalter (26) aufweist, und mit einem Trägerelement (2), an dem der Reflektor (1) an einer oberen und unteren Lagerstelle (3 und 4) gehaltert ist, und mit einem fernbetätigbaren Steller (17), durch den der Reflektor (1) um eine von den Lagerstellen (3 und 4) definierte Schwenkachse (5) zur Kurvenlichtregelung schwenkbar ist, wobei der vordere Rand (10) des Reflektors (1) radial nach außen gerichtet ist und ein Befestigungselement für das Trägerelement (2), und für eine Halteaufnahme (16) des fernbetätigbaren Stellers (17) ist wobei die Halteaufnahme (16) unterhalb des Reflektors (1) angeordnet ist und an dem unteren vorderen Rand (10) der Reflektors (1) befestigt ist, **dadurch gekennzeichnet, dass** der vordere Rand des Reflektors (1) auch ein Befestigungselement für mindestens eine Versteifungsstütze (15) ist, wobei die Versteifungsstütze (15) zwischen dem oberen vorderen Rand (10) des Reflektors (1) und der Halteaufnahme (16) verläuft.

2. Scheinwerfer nach Anspruch 1, **dadurch gekennzeichnet, dass** das Trägerelement (2) an der unteren Lagerstelle (4) über die Halteaufnahme (16) des Stellers (17) an dem unteren vorderen Rand des Reflektors (1) gehaltert ist.

3. Scheinwerfer nach Anspruch 1 oder 2, **dadurch gekennzeichnet, dass** die Halteaufnahme (16) sich zur Rückseite des Reflektors (1) hin erstreckt und an ihrem rückwärtigen Endabschnitt den fernbetätigbaren Steller (17) für Kurvenlicht trägt, der über ein Stellelement mit dem Trägerelement (2) gekoppelt ist, wobei die Versteifungsstütze (15) mit dem rückwärtigen Endabschnitt der Halteaufnahme (16) verbunden ist.

4. Scheinwerfer nach einem der Ansprüche 1 bis 3, **dadurch gekennzeichnet, dass** von oben auf den Scheinwerfer gesehen zu beiden Seiten des Reflektors (1) eine Versteifungsstütze (15) verläuft.

5. Scheinwerfer nach Anspruch 4, **dadurch gekennzeichnet, dass** die beiden Versteifungsstützen (15) im Bereich des oberen vorderen Randes (10) durch einen sie verbindenden Steg einstückig ausgebildet sind.

6. Scheinwerfer nach-einem der Ansprüche 1 bis 5, **dadurch gekennzeichnet, dass** die Versteifungsstütze (15) aus Blech besteht.

7. Scheinwerfer nach einem der Ansprüche 1 bis 6, **dadurch gekennzeichnet, dass** die Halteaufnahme (16) ein dem Steller (17) zugeordnetes Getriebe und eine elektrischen Steuereinheit trägt.

8. Scheinwerfer nach einem der Ansprüche 1 bis 7, **dadurch gekennzeichnet, dass** die obere Lagerstelle (3) ein den Reflektor (1) ausschließlich radial halterndes Lager mit einem Lagerzapfen (6) und einer Lageröffnung (7) ist, die untere Lagerstelle (4) den Reflektor (1) in alle Richtungen haltert und eine schwingungsdämpfende Vorrichtung (8) ein federndes Element (9) aufweist, das zwischen dem Trägerelement (2) im Bereich der oberen Lagerstelle (3) und einem vorderen Rand (10) des schalenförmigen Reflektors (1) angeordnet ist und den Lagerzapfen (6) und eine Innenseite der Lageröffnung (7) radial aneinander drücken.

9. Scheinwerfer nach Anspruch 8, **dadurch gekennzeichnet, dass** die schwingungsdämpfende Vorrichtung (8) eine konvexe Kurvenfläche (11) aufweist, an der das federnde Element (9) mit einer konvexen Kurvenfläche (12) unter Vorspannung anliegt, wobei eine der konvexen Kurvenflächen (11 bzw. 12) die vertikale Schwenkachse (5) in einem Abschnitt umgibt.

10. Scheinwerfer-nach einem der Ansprüche 1 bis 9, **dadurch gekennzeichnet, dass** die Schenkachse (5) zwischen dem Reflektor (1) und der Linse (21) verläuft.

## Claims

1. Headlight with a projection module, which has a dish-shaped reflector (1), a lens (21) and a lens holder (26) attached to the front rim (10) of the reflector (1), and with a support element (2) on which the reflector (1) is held on an upper and lower bearing (3 and 4), and with a remotely controlled regulating unit (17), by means of which the reflector (1) can be swivelled about a pivoting axis (5) defined by bearing points (3 and 4) for adjustment of illumination on curves, whereby the front rim (10) of the reflector (1) is aligned radially outwards and is an attachment element for the support element (2) and for the support mounting (16) of the remotely controlled regulating unit (17), whereby the support mounting (16) is disposed below the reflector (1) and is attached to the lower front rim (10) of the reflector (1), **characterized in that** the front rim of the reflector (1) is also an attachment element for at least one reinforcement (15), whereby the reinforcement (15) runs between the upper, front rim (10) of the reflector (1) and the support mounting (16).

2. Headlight in accordance with claim 1, **characterized in that** the support element (2) on the lower bearing (4) is held, on the lower rim of the reflector (1), by means of the support mounting (16) of the regulating unit (17).

3. Headlight in accordance with claim 1 or 2, **characterized in that** the support mounting (16) extends towards the rear side of the reflector (1) and carries, on its rear end section, the remotely controlled regulating unit (17), for lighting on curves, which is connected to the support element (2) by means of a regulating element, whereby the reinforcement (15) is connected to the rear end-section of the support mounting (16).

4. Headlight in accordance with one of claims 1 to 3, **characterized in that** a reinforcement (15) runs, as seen from above looking down on the headlight, to both sides of the reflector (1).

5. Headlight in accordance with claim 4, **characterized in that** the two reinforcements (15) are, in the area of the upper, front rim (10), developed, by means of a connecting crosspiece, as a single piece.

6. Headlight in accordance with one of claims 1 to 5, **characterized in that** the reinforcement (15) is made of sheet metal.

7. Headlight in accordance with one of claims 1 to 6, **characterized in that** the support mounting (16) carries a drive unit and an electrical control unit associated with the regulation unit (17).

8. Headlight in accordance with one of claims 1 to 7, **characterized in that** the upper bearing point (3) is a bearing, with a journal (6) and a bearing aperture (7), that exclusively supports the reflector (1) radially, and supports the lower bearing point (4) of the reflector (1) in all directions and has a device (8), which is disposed between the support element (2) in the area of the upper bearing point (3) and a front rim (10) of the dish-shaped reflector (1), for damping oscillations of a spring element (9), and **in that** the journal (6) and an inner side of the bearing aperture (7) press against each other in a radial direction.

9. Headlight in accordance with claim 8, **characterized in that** the oscillation-damping device (8) has a convex surface (11) on which the spring element (9) rests, with a curved face (12), under tension, whereby one of the convex, curved surfaces (11 or 12) surrounds, in a sectional view, the vertical pivoting axis (5).

10. Headlight in accordance with one of claims 1 to 9, **characterized in that** the pivoting axis (5) runs between the reflector (1) and the lens (21).

## Revendications

1. Projecteur comportant un module de projection qui présente un réflecteur (1) en forme de coque, une lentille (21) et un porte-lentille (26) fixé sur le bord avant (10) du réflecteur (1), et comportant un élément support (2) sur lequel le réflecteur (1) est supporté en un point de montage supérieur (3) et en un point de montage inférieur (4), et comportant un actionneur (17) commandé à distance qui permet de faire pivoter le réflecteur (1) autour d'un axe de pivotement (5) défini par les points de montage (3 et 4) pour régler l'éclairage de virage, le bord avant (10) du réflecteur (1) étant orienté radialement vers l'extérieur et constituant un élément de fixation pour l'élément support (2) et pour un logement de retenue (16) de l'actionneur (17) commandé à distance, le logement de retenue (16) étant agencé au-dessous du réflecteur (1) et fixé au bord avant (10) inférieur du réflecteur (1), **caractérisé en ce que** le bord avant du réflecteur (1) est aussi un élément de fixation pour au moins un étai de renforcement (15), l'étai de renforcement (15) s'étendant entre le bord avant (10) supérieur du réflecteur (1) et le logement de retenue (16).

2. Projecteur selon la revendication 1, **caractérisé en ce que** l'élément support (1) est supporté sur le bord avant inférieur du réflecteur (1) au niveau du point de montage (4) inférieur via le logement de retenue (16) de l'actionneur (17).

3. Projecteur selon l'une ou l'autre des revendications 1 et 2, **caractérisé en ce que** le logement de retenue (16) s'étend vers la face arrière du réflecteur (1) et porte sur son tronçon d'extrémité postérieur l'actionneur (17) commandé à distance pour l'éclairage de virage, lequel est accouplé via un élément de réglage à l'élément support (2), l'étai de renforcement (15) étant relié au tronçon d'extrémité arrière du logement de retenue (16).

4. Projecteur selon l'une des revendications 1 à 3, **caractérisé en ce que**, vu depuis le haut sur le projecteur, un étai de renforcement (15) s'étend des deux côtés du réflecteur (1).

5. Projecteur selon la revendication 4, **caractérisé en ce que** dans la région du bord avant (10) supérieur, les deux étais de renforcement (15) sont réalisés d'un seul tenant par une traverse qui les relie.

6. Projecteur selon l'une des revendications 1 à 5, **caractérisé en ce que** l'étai de renforcement (15) est en tôle.

7. Projecteur selon l'une des revendications 1 à 6, **caractérisé en ce que** le logement de retenue (16) porte une transmission associée à l'actionneur (17) et une unité de commande électrique.

8. Projecteur selon l'une des revendications 1 à 7, **caractérisé en ce que** le point de montage supérieur (3) est un palier supportant radialement uniquement le réflecteur (1) avec un tourillon (6) et une ouverture de palier (7), le point de montage inférieur (4) supporte le réflecteur (1) dans toutes les directions et **en ce qu'**un dispositif d'amortissement de vibrations (8) présente un élément faisant ressort (9) qui est agencé entre l'élément support (2) dans la région du point de montage supérieur (3) et un bord inférieur (10) du réflecteur (1) en forme de coque et qui presse radialement l'un contre l'autre le tourillon (6) et une face intérieure de l'ouverture de palier (7).

9. Projecteur selon la revendication 8, **caractérisé en ce que** le dispositif d'amortissement de vibrations (8) présente une surface en courbe (11) convexe sur laquelle l'élément faisant ressort (9) est en appui sous précontrainte avec une surface en courbe (12) convexe, une des surfaces en courbe convexes (11, 12) entourant respectivement l'axe de pivotement (5) vertical sur un tronçon.

10. Projecteur selon l'une des revendications 1 à 9, **caractérisé en ce que** l'axe de pivotement (5) s'étend entre le réflecteur (1) et la lentille (21).
